# EUROPEAN PATENT APPLICATION

(11) **EP 2 284 653 A1**
(43) Date of publication of application: **16.02.2011**
(21) Application number: 09167897.9
(22) Date of filing: 14.08.2009
(51) Int. Cl.: G06F 3/023, G06F 3/048

(54) **Electronic device with touch-sensitive display and method of facilitating input at the electronic device**

(71) Applicant: RESEARCH IN MOTION LIMITED, Waterloo, Ontario N2L 3W8 (CA)
(72) Inventor: Griffin, Jason Tyler, Waterloo Ontario N2L 3W8 (CA); Fux, Vadim, Waterloo Ontario N2L 5Z5 (CA)
(74) Representative: Fennell, Gareth Charles

(57) **Abstract**

A method includes receiving a character in response to a touch on a touch-sensitive display, adding the character to a character string, identifying, from stored data, objects that at least partially match the character string, and determining a next character of at least one of the objects identified, yielding a set of next characters.

## Description

The present disclosure relates generally to portable electronic devices, including but not limited to portable electronic devices having touch-sensitive displays.

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive or touchscreen devices are desirable.

### GENERAL

A method may comprise receiving a character in response to a touch on a touch-sensitive display, adding the character to a character string, identifying, from stored data, objects that at least partially match the character string, and determining a next character of at least one of the objects identified, yielding a set of next characters.

A computer-readable medium may have computer-readable code executable by at least one processor of the portable electronic device to perform the above method.

An electronic device may comprise a touch-sensitive display and a processor operably connected to the touch-sensitive display. The processor executes a program to cause the electronic device to receive a character in response to a touch on the touch-sensitive display, add the character to a character string, identify, from stored data, objects that at least partially match the character string, determine a next character of at least one of the objects identified, and increase an active area on the touch-sensitive display for at least one next character.

### BRIEF DESCRIPTION OF THE DRAWINGS

FIG. 1 is a simplified block diagram of components including internal components of a portable electronic device in accordance with the present description.

FIG. 2 is a front view of a portable electronic device in accordance with the present description.

FIG. 3 is a flowchart illustrating a method of facilitating input at the portable electronic device in accordance with the present description.

FIG. 4 illustrates an example of a virtual keyboard after increasing active areas of the next characters on a touch-sensitive display of the portable electronic device in accordance with the present description.

FIG. 5 illustrates an example of virtual keyboard after increasing active areas and sizes of the displayed representations of the next characters on a touch-sensitive display of the portable electronic device in accordance with the present description.

FIG. 6 illustrates another example of a virtual keyboard after increasing active areas and sizes of displayed representations of the next characters on a touch-sensitive display of the portable electronic device in accordance with the present description.

### DESCRIPTION OF PREFERRED EMBODIMENTS

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

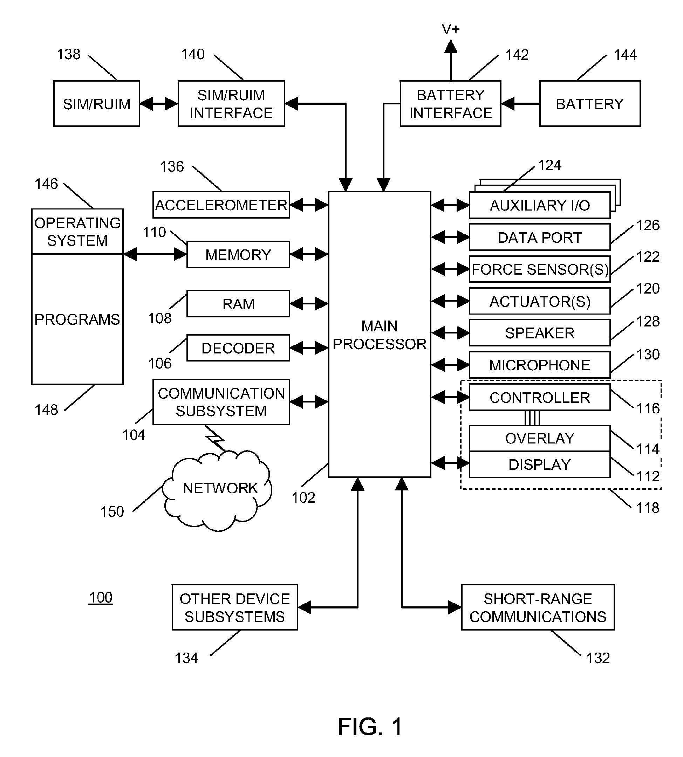

A block diagram of an example of a portable electronic device 100 is shown in FIG. 1. The portable electronic device 100 includes multiple components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, a memory 110, a display 112 with a touch-sensitive overlay 114 connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications, 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, and other items that may be displayed or rendered on a portable electronic device, is displayed on the touch-sensitive display 118 via the processor 102. The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the memory 110.

The portable electronic device 100 also includes an operating system 146 and software components 148 that are executed by the processor 102 and are typically stored in a persistent, updatable store such as the memory 110. Additional applications may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or alternatively to the auxiliary I/O subsystem 124. A subscriber may also compose data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

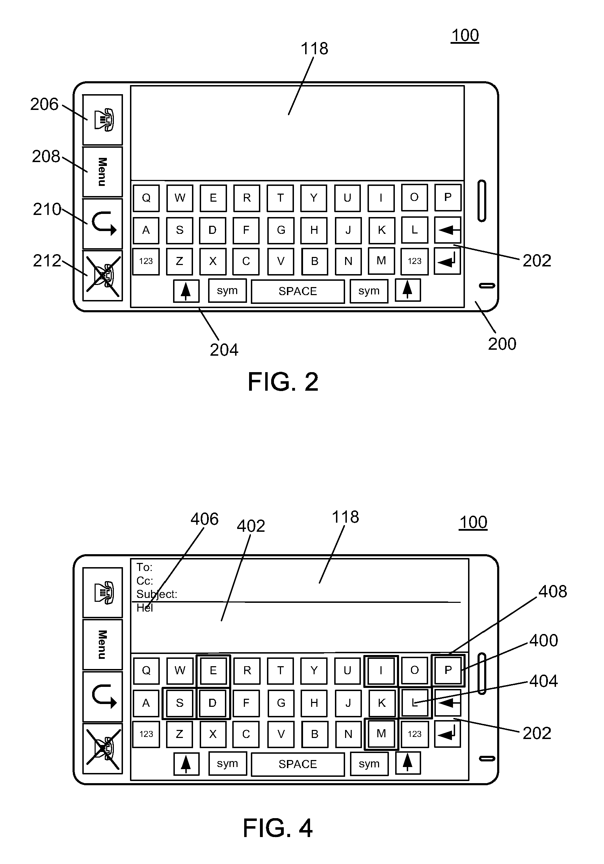

A front view of an example of a portable electronic device 100 is shown in FIG. 2. The portable electronic device 100 includes a housing 200 that houses the internal components that are shown in FIG. 1 and frames the touch-sensitive display 118 such that an outer surface of the touch-sensitive display 118 is exposed for interaction. In the example shown in FIG. 2, the touch-sensitive display 118 includes a landscape virtual keyboard 202 for input of characters, for example, letters, numbers, punctuation marks, spaces, control characters (e.g., tab, line break, section break, and so forth), symbols, and so forth, as well as functions (e.g., enter, alt, ctrl), during operation of the portable electronic device 100. The present disclosure is not limited to the landscape virtual keyboard 202 shown, but applies to other keyboards including portrait keyboards, other full keyboards having different layouts, reduced keyboards, and so forth. The displayed keyboard 202 is shown comprising a plurality of soft buttons or soft keys, which are referred to herein as buttons for the sake of simplicity.

The accelerometer 136 is utilized to detect direction of gravitational forces or gravity-induced reaction forces. Movement of the portable electronic device 100 that changes the orientation of the device 100 is detected via the accelerometer 136. The keyboard that is provided may be dependent on the orientation of the portable electronic device 100.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. A capacitive touch-sensitive overlay 114 may be, for example, an assembly of multiple layers in a stack and is fixed to the display 112 via a suitable optically clear adhesive. The location of a touch detected on the touch-sensitive display 118 may include x and y components, e.g., horizontal and vertical with respect to one's view of the touch-sensitive display 118, respectively. For example, the x location component may be determined by a signal generated from one touch sensor layer, and the y location component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected. Other attributes of the user's touch on the touch-sensitive display 118 may also be determined. For example, the size and the shape of the touch on the touch-sensitive display 118 may be determined in addition to the location based on the signals received at the controller 116 from the touch sensor layers.

A touch on the touch-sensitive display 118 may be established by determining the coordinate values of the touch location and input may be determined by the processor 102 from association of the coordinate values with stored input values. Thus, a feature such as a virtual button displayed on the touch-sensitive display 118 is selected by matching the coordinate values of the touch location on the touch-sensitive display 118 to the respective feature.

In the present example, the portable electronic device 100 includes four optional physical buttons 206, 208, 210, 212 that perform functions or operations when selected. The remainder of the buttons shown in the example of the portable electronic device 100 of FIG. 2 are virtual buttons of the virtual keyboard 202 displayed on the touch-sensitive display 118.

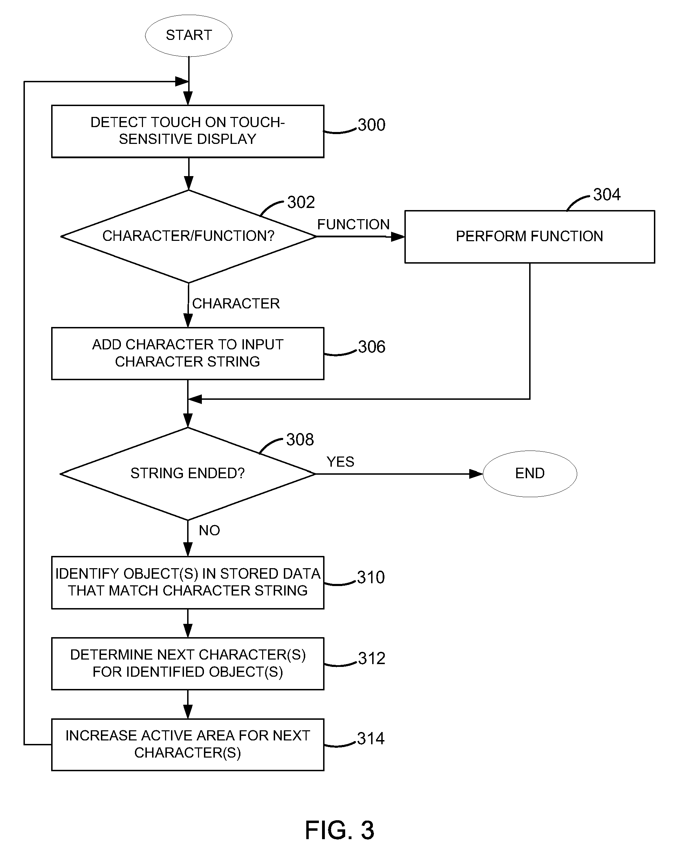

A flowchart illustrating a method of facilitating input by the portable electronic device 100 is shown in FIG. 3. The method may be carried out by software executed by, for example, the processor 102. Coding of software for carrying out such a method is within the scope of a person of ordinary skill in the art given the present description. The example of FIG. 3 is described with respect to input of characters, for example, in a text field of an application.

The processor 102 detects 300 a touch on the touch-sensitive display 118. The location of the touch on the touch-sensitive overlay 114 is determined upon detection of the touch, which location may include coordinates. If a determination 302 is made that the touch location corresponds to a function, the function is performed 304 and the process continues at 308. If a determination 302 is made that the touch location corresponds to a character, the character is added 306 to a character string being entered into the portable electronic device 100. If no character is in the character string at this time, the character is added as the first character in the character string. If the character string is ended 308, the process ends. If the character string is not ended 308, the process continues at 310. Examples of characters that may end a character string include a space or period. Examples of functions that may end a character string include return or enter.

The portable electronic device 100 includes stored data that comprises, for example, one or more dictionaries, as well as words, acronyms, and other character combinations previously entered into the portable electronic device, each of which will be referred to herein as an object for simplicity. The stored data may be found, for example, in memory 110. Objects that at least partially match the character string are determined 310. Matching may include, for example, matching of the entire character string with the initial part of an object, without any missing or different characters. For example, when "fur" is the character string, matches include "further" and "furry" but not "future." The matching process may additionally include matching all but one or two characters between the character string and the initial part of an object, i.e., partial matching where, e.g., 0, 1, or 2, unmatched characters are present between the object and the character string. Although any number of unmatched characters may be permitted, more unmatched characters result in more identified objects and a longer search time. The number of unmatched characters may be selected by the user. For example, when "iezoel" or "oiezoel" or "liezoelr" is the character string, "piezoelectric" is a match at 308. Partial matching may allow for typographical errors that may occur. Capitalization of letters may be ignored for the purpose of matching.

For one or more of the objects that at least partially match the character string, the next character of each matching object is determined 312. The next character is the character of an object that follows the last "matching" character with the character string. In the case where partial matching is utilized, the last "matching" character may not actually be a match between the object and the character string, but rather the character in the object that aligns with the character string. In other words, the character from the objects that may subsequently be entered in the character string is a "next character." When the character string is considered to match the entire object, the next character may be a space, a period or another punctuation mark, or a control character such as a return or enter character, line break character, page break character, tab character, and so forth. The collection of the next characters for each of the objects identified as matching at 312 is referred to as the set of next characters. The next character may be determined for fewer than all of the identified objects. For example, context of the word may be utilized to eliminate objects. For example, context may include whether a word prior to the string makes sense with an object. Context may include whether the string is at the beginning of a sentence. Inappropriate objects may be eliminated. Frequency of use may be utilized to identify objects that are commonly used or to eliminate objects that are not commonly used. The active area of one or more of the set of next characters may be increased 314. When a touch is detected in the active area associated with a displayed item, such as a button, the touch is considered to be associated with the displayed item. Increasing an active area increases accuracy of selection. The active area is increased until a next character or a function is entered 302, after detection of a further touch 300. Alternatively, the active area may be increased until other events occur, such as exiting a program, cancelling the current function, and so forth.

The flowchart of FIG. 3 is simplified for the purpose of explanation. Additional or fewer steps may be carried out. Further touches may also be detected after a character ends a character string.

An example of facilitating input by the portable electronic device 100 is shown in FIG. 4. In this example, the virtual keyboard 202 is rendered on the touch-sensitive display 118 to facilitate entry of data in an application, such as an email application.

In this example, the character string "He" is entered in a field 402 of an e-mail. A touch on the touch-sensitive overlay 114 is detected 300 at a location 404 that is determined 302 to correspond to the character "I".

The character "I" is added 306 to the character string 406 and displayed by the portable electronic device 100, resulting in the character string "Hel". The input "I" does not end 308 the character string. Matching of the character string results in objects identified 310 that include "help", "held", "hello", "Hellen", "Helsinki", "helmet", and "helicopter". In this example, for each of these objects, a match is present between its characters and the order of its characters and those of the character string.

For at least one and up to all of the identified objects, the next character is determined 312. The next character is the next character in the object. Thus, the characters "p", "d", "I", "e", "s", "m", and "i" form the set of next characters, presuming the above list includes all identified objects. The active area 400 normally associated with the letter "p" is indicated by the inner square surrounding the "P" button on the display, which active area is the same as the displayed area for the "P" button. An increased active area 408 associated with the letter "p" is indicated by the outer square surrounding the "P" on the display. Although the difference between the increased area 408 and the displayed area 400 is not visible to the user, the area 408 is shown in FIG. 4 for the purpose of illustration. The increase from the displayed area 400 to the increased area 408 facilitates more accurate selection of the character "p". Similarly, the respective active areas of the touch-sensitive overlay 114 for which a touch is associated with each of the characters "d", "l", "e", "s", "m", and "i" are increased 314 as shown in FIG. 4. The increase in each active area facilitates selection of these characters.

In the examples shown, the method is applied to each character of the character string. In an alternative embodiment, a minimum number of characters may be required prior to applying the method.

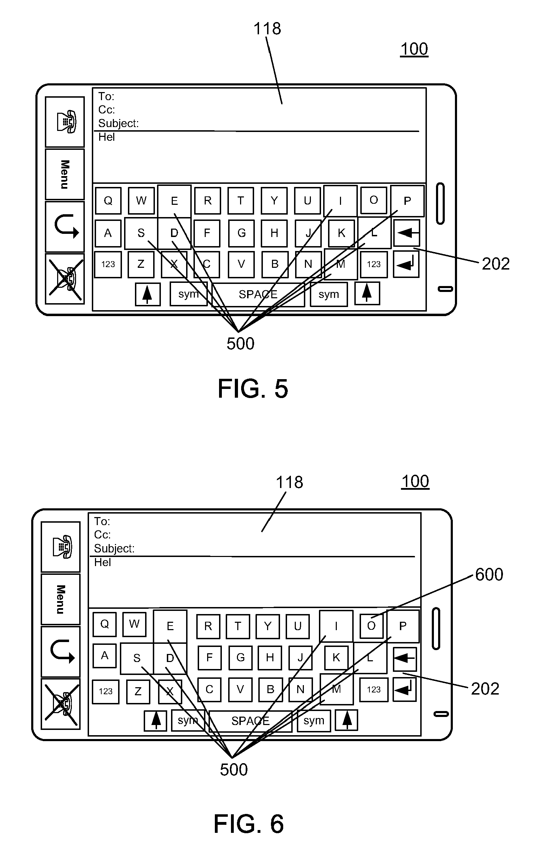

In addition to increasing the active areas for one or more of the next characters, e.g., "p", "d", "l", "e", "s", "m", and "i", one or more of the respective areas 500 of the displayed representations of the characters may be increased on the touch-sensitive display 118, as shown in FIG. 5. The active area of each of the characters "p", "d", "l", "e", "s", "m" is therefore increased and the visual representation of each of the characters "p", "d", "l", "e", "s", "m", and "i" is also increased, facilitating more accurate selection of the characters. In this example, the active areas 500 are the same as the rendered or displayed areas for each character.

In addition to increasing the active areas and the size of the displayed representations of one or more of the next characters, e.g., "p", "d", "l", "e", "s", "m", and "i", , the active area and/or the size of the displayed representation of one or more of the buttons 600 not in the set of next characters, e.g., buttons other than those for the characters "p", "d", "l", "e", "s", "m", and "i" in the example of FIG. 6, may be decreased, thereby further facilitating selection of the next characters, e.g., "p", "d", "l", "e", "s", "m", and "i".

Optionally, the size of the displayed representations of one or more of the next characters may be increased without increasing the active area. Thus, there may be an area between the boundary of the displayed representation and the active area that does not result in selection of the associated character when a touch is detected on that area. This increase in size of the displayed representations increases visibility for the user.

In other examples, the identified objects may include contact data stored in a contacts database and contact data that have at least partially match the character string. Such identification is useful during, for example, searching for contact data for information or for placing a call, populating an email address, populating an SMS or MMS address, and so forth.

Objects from stored data at the electronic device are compared to a string of characters entered at the electronic device to determine possible subsequent input, e.g., characters that may not yet input but may be input next. For one or more next characters, the active area for one or more of the next characters may be increased in size, which may facilitate more accurate character entry. The area of the displayed representation of the next character may also be increased to increase visibility of the set of next characters. Thus, the displayed button size on a virtual keyboard may be increased for at least one of the set next characters. The increase in active area facilitates increased typing speed and decreases the chance of erroneous input using a virtual keyboard on a touch-sensitive display, thereby reducing device use time and power consumption and increasing battery life.

While the embodiments described herein are directed to particular implementations of the portable electronic device and the method of controlling the portable electronic device, modifications and variations may occur to those skilled in the art. All such modifications and variations are believed to be within the sphere and scope of the present disclosure. The described embodiments are to be considered in all respects as illustrative and not restrictive. The scope of the disclosure is, therefore indicated by the appended claims rather than by the foregoing description. All changes that come within the meaning and range of equivalency of the claims are to be embraced within their scope.

## Claims

1. A method comprising:
receiving a character in response to a touch on a touch-sensitive display;
adding the character to a character string;
identifying, from stored data, objects that at least partially match the character string; and
determining a next character of at least one of the objects identified, yielding a set of next characters.

2. The method according to claim 1, comprising increasing an active area of at least one of the set of next characters on the touch-sensitive display.

3. The method according to claim 1 or claim 2, wherein receiving a character comprises detecting the touch on the touch-sensitive display and determining the character based on a location of the touch.

4. The method according to any preceding claim, wherein identifying objects comprises identifying language objects stored in memory on a portable electronic device.

5. The method according to any preceding claim, wherein identifying objects comprises identifying contact data stored in memory on a portable electronic device.

6. The method according to claim 1, wherein receiving a character comprises receiving a character from a virtual keyboard of a portable electronic device.

7. The method according to any preceding claim, wherein determining a next character comprises determining, for each of the objects, one of a next character for the object and an end of the object.

8. The method according to claim 7, wherein the end of the object comprises a space.

9. The method according to claim 2, wherein increasing an active area comprises increasing, on the touch-sensitive display, an area associated with a touch for at least one of the set of next characters.

10. The method according to any preceding claim, comprising increasing an area of a displayed representation associated with at least one of the set of next characters.

11. The method according to any preceding claim, comprising decreasing, on the touch-sensitive display, an area associated with at least one character that is not in the set of next characters.

12. The method according to any preceding claim, comprising decreasing an area of a displayed representation associated with at least one character that is not in the set of next characters.

13. The method according to any preceding claim, comprising rendering the character in a field displayed on the touch-sensitive display.

14. A computer-readable medium having computer-readable code executable by at least one processor of the portable electronic device to perform the method of any one of the preceding claims.

15. An electronic device comprising:
a touch-sensitive display;
a processor operably connected to the touch-sensitive display, wherein the processor executes a program to cause the electronic device to receive a character in response to a touch on the touch-sensitive display, add the character to a character string, identify, from stored data, objects that at least partially match the character string, determine a next character of at least one of the objects identified, and increase an active area on the touch-sensitive display for at least one next character.

## Amended claims

### Amended claims in accordance with Rule 137(2) EPC.

**1.** A method comprising:
receiving a character in response to a touch on a touch-sensitive display (118);
adding the character to a character string;
identifying, from stored data, objects including partially matching objects including at least one unmatched character between the partially matching objects and the character string; and
determining a next character of at least one of the partially matching objects identified,
yielding a set of next characters.

**2.** The method according to claim 1, comprising increasing an active area of at least one of the set of next characters on the touch-sensitive display (118).

**3.** The method according to claim 1 or claim 2, wherein receiving a character comprises detecting the touch on the touch-sensitive display (118) and determining the character based on a location of the touch.

**4.** The method according to any preceding claim, wherein identifying objects comprises identifying language objects stored in memory (106, 108) on a portable electronic device (100).

**5.** The method according to any preceding claim, wherein identifying objects comprises identifying contact data stored in memory (106, 108) on a portable electronic device (100).

**6.** The method according to claim 1, wherein receiving a character comprises receiving a character from a virtual keyboard of a portable electronic device (100).

**7.** The method according to any preceding claim, wherein determining a next character comprises determining, for each of the objects, one of a next character for the object and an end of the object.

**8.** The method according to claim 7, wherein the end of the object comprises a space.

**9.** The method according to claim 2, wherein increasing an active area comprises increasing, on the touch-sensitive display (118), an area associated with a touch for at least one of the set of next characters.

**10.** The method according to any preceding claim, comprising increasing an area of a displayed representation associated with at least one of the set of next characters.

**11.** The method according to any preceding claim, comprising decreasing, on the touch-sensitive display (118), an area associated with at least one character that is not in the set of next characters.

**12.** The method according to any preceding claim, comprising decreasing an area of a displayed representation associated with at least one character that is not in the set of next characters.

**13.** The method according to any preceding claim, comprising rendering the character in a field displayed on the touch-sensitive display (118).

**14.** A computer-readable medium having computer-readable code executable by at least one processor (102) of the portable electronic device (1000 to perform the method of any one of the preceding claims.

**15.** An electronic device (100) comprising:
a touch-sensitive display (118);
a processor (102) operably connected to the touch-sensitive display (118), wherein the processor (102) executes a program to cause the electronic device (100) to receive a character in response to a touch on the touch-sensitive display (118), add the character to a character string, identify, from stored data, objects including partially matching objects including at least one unmatched character between the partially matching objects and the character string, determine a next character of at least one of the partially matching objects identified, and increase an active area on the touch-sensitive display (118) for at least one next character.
